# EUROPEAN PATENT APPLICATION

(11) **EP 2 945 005 A1**
(43) Date of publication of application: **18.11.2015**
(21) Application number: 14168623.8
(22) Date of filing: 16.05.2014
(51) Int. Cl.: G02B 27/48, H04N 9/31, G02B 27/01

(54) **Laser projection system for reducing speckle noise**

(71) Applicant: Optotune AG, 6370 Stans (CH)
(72) Inventor: ASCHWANDEN, Manuel, 6319 Allenwinden (CH); NIEDERER, David, 5024 Küttigen (CH)
(74) Representative: Schulz, Ben Jesko

(57) **Abstract**

The invention relates to a Laser projection system (1), particularly for generating a head-up display, comprising: a laser light source (100) being configured to provide a collimated laser light beam (101) having a non-disturbed wavefront, and a movable mirror (200) being configured to reflect said laser light beam (101) in different directions such that the respective reflected laser light beam (102a, 102b, 103a, 103b) runs through an assembly of optical elements (e.g. a lens stack) (400) so as to generate a projection image on a virtual image plane (404), the image comprising an image pixel (P, P') for each of said directions. According to the invention, the assembly of optical elements (400) comprises at least a first and second optical element (e.g. lenses) (401, 402, 403), wherein said optical elements (401, 402, 403) are arranged between the moveable mirror (200) and said virtual image plane (404), and wherein the mirror (200) is located such that the respective reflected laser light beam (102, 103, 104, 102a, 102b, 103a, 103b) is focused by said assembly (400) onto or around the respective image pixel (P, P') in said virtual image plane (404) with substantially the same chief ray angle (A) and with substantially the same numerical aperture (NA).

## Description

The present invention relates to a laser projection system for reducing Speckle noise according to claim 1.

Laser speckles are one of the major obstacles for laser projection systems. While area based projector technologies such as LCOS (for Liquid Crystal On Silicon) or DLP (for Digital Light Processor) based projectors can remove speckles using moving diffusers, the integration time in scanning mirror type laser projection systems is not long enough to have an efficient despeckling using moving diffusers.

When a surface is illuminated by a light wave, according to diffraction theory, each point on an illuminated surface acts as a source of secondary spherical waves. The light at any point in the scattered light field is made up of waves which have been scattered from each point on the illuminated surface. If the surface is rough enough to create path-length differences exceeding for example one wavelength, giving rise to phase changes greater than 2π, the amplitude, and hence the intensity, of the resultant light on a detector, where interference of different secondary spherical waves occurs varies randomly.

In a projection system, two types of speckles can be distinguished, namely subjective and objective speckles. The objective speckles are interference patterns which are generated on a surface. In particular, objective speckles can be seen very well, when laser light has been scattered off a rough surface and then falls on another surface. For example, if a photographic plate or another two-dimensional optical sensor is located within the scattered light field without a lens, a speckle pattern is obtained whose characteristics depends on the geometry of the system and the wavelength of the laser. The light at a given point in the speckle pattern is made up of contributions from the whole of the scattering surface. The relative phases of these waves vary across the surface, so that the sum of the individual waves varies randomly. The pattern is the same regardless of the direction from which it is imaged, just as if it were a painted pattern.

The "size" of the speckles is a function of the wavelength of the light, the size of the laser beam which illuminates the first surface, and the distance between this surface and the surface where the speckle pattern is formed. This is the case because when the angle of scattering changes such that the relative path difference between light scattered from the center of the illuminated area compared with light scattered from the edge of the illuminated area changes by λ, the intensity becomes uncorrelated.

The second type of speckles is the so called subjective speckles. Subjective speckles are created when an observer, for example an eye or another imaging system images a coherently illuminated surface. The lenses of the imaging system focus light from different angles onto an imaging point (pixel), resulting in the interference of the light on this point. When the light has a disturbed wavefront, or the imaging system itself introduces a large disturbance of the wavefront, the light interferes positively and negatively, creating additional intensity variations.

A variety of speckle reducing methods have been known aiming for an averaging of the speckle patterns.

In this regard US2008/0055698A1 discloses an optical modulator module, including an optical modulator receiving and modulating incident lights, and outputting modulated lights as output lights, and a transparent substrate that is placed on the optical modulator, allowing the incident lights and the output lights to transmit, and that has a phase manipulating pattern formed on an area of a surface of the transparent substrate. With an optical modulator module according to the invention, laser speckles can be reduced.

Further, US2012/0081786A1 describes despeckle elements, laser beam homogenizers and methods for despeckling. The despeckle element includes a transparent material having a first surface including a plural number of optical steps and a second surface having a plural number of microlenses. Each of the number of optical steps is in a one-to-one correspondence with at least one of the microlenses. One of the first surface and the second surface is configured to receive collimated light having a coherence length and a remaining one of the first surface and the second surface is configured to pass the collimated light separated into a plurality of beamlets corresponding to the number of microlenses. A height of each step of at least two of the optical steps is configured to produce an optical path difference of the collimated light longer than the coherence length and therefore destroying the coherence of the laser light.

Furthermore, WO2012/122677A1 describes a speckle reducing device for a laser projection. The laser projection system comprises at least a laser light source for emitting laser light and an image generation element, such as a light deflector as a MEMS mirror or a two dimensional intensity modulating array as a digital light processor (DLP), for modulating the laser light into image light. The image light is projected onto a screen through a light outlet to form an image. The speckle reducing device utilizes at least a laser phase disturbing element disposed at a projection path of the laser light between the laser light source and the screen for the laser light passing in a reflective or transmitting mode. At least a phase disturbing pattern is arranged on a surface of the phase disturbing element in order to generate uneven phase change in the laser light passing through the phase disturbing pattern, so that at last the coherence length of the image light emitted from the screen is reduced to effectively reduce speckle.

All these kind of prior art systems have the drawback that they rely on the principle of destroying the coherence of the laser light and therefore actively reducing speckles. This is particularly difficult to achieve in point scanning systems, since the perturbation for each image pixel has to be created in an extremely short time.

Further, in the past, different approaches based on micro lens arrays have been proposed to prevent speckles from occurring by making sure that the wavefront remains undisturbed on the path to the observer lens for each pixel (only the divergence of the laser beam is increased to provide an increased viewing angle). Unfortunately, this approach requires an extreme control of the laser beam position such that each pixel is created exactly in the middle of each micro lens. This requirement is almost impossible to be achieved. Furthermore, the unwanted Moiree effects occur due to diffraction of the light on each pixel. Therefore, micro lens array based solutions do not work.

It is an object of the invention to propose a different approach for speckle free projection systems. Instead of removing speckles by using a coherence destroying averaging approach, this invention aims to create a speckle free image by maintaining excellent coherence and a non-disturbed wavefront for each image pixel throughout the entire projection systems up to the observer.

This problem is solved by a laser projection system having the features of claim 1. Preferred embodiments are stated in the sub claims or are described below.

According to claim 1 the laser projection system comprises:
- a laser light source being configured to provide an (e.g. collimated, divergent or convergent) coherent laser light beam, particularly having a non-disturbed wavefront,
- at least one movable mirror being configured to reflect said laser light beam in different directions such that the respective reflected laser light beam runs through an assembly of optical elements (such as a lens stack) so as to generate a projection image on (or around) a virtual image plane, the image comprising an image pixel for each of said directions,
wherein
- the at least one mirror is particularly designed to reflect said laser light beam such that the reflected laser light beam's wavefront remains non-disturbed,
- the assembly of optical elements comprises at least a first and second optical element, wherein said optical elements are arranged between the moveable mirror and said virtual image plane (wherein particularly the assembly of optical elements further comprises an aperture stop, wherein said optical elements are arranged between the aperture stop and said virtual image plane), and
- wherein the mirror is located such (namely particularly at or close to the aperture stop) that each reflected laser light beam is focused by the assembly of optical elements onto (or around) the virtual image plane with the same or substantially the same chief ray angle (e.g. telecentric lens design) and with the same or substantially the same numerical aperture, wherein particularly the respective reflected laser light beam is focused by the assembly of optical elements onto the respective image pixel in said virtual image plane such that the light of the respective image pixel has a substantially non-disturbed wavefront.

Here, substantially the same chief ray angle means that the deviation between two chief ray angles lies with the range from -20° to +20°, preferably in the range from - 15° to +15°, preferably in the range from -10° to +10°, preferably in the range from - 5° to +5°, preferably in the range from -3° to +3°, preferably in the range from -2° to +2°, preferably in the range from -1° to +1°.

Further, substantially the same numerical aperture means that the deviation between two numerical apertures is smaller than 0.2, preferably smaller than 0.15, preferably smaller than 0.1, preferably smaller than 0.05, preferably smaller than 0.01.

Particularly, the aperture stop of the assembly of optical elements, which is the opening (aperture) that limits the quantity of light that can enter the assembly of optical elements, is positioned at the location of the mirror or close by such that all laser light beams reflected from the mirror and forming the image can pass through the assembly of optical elements.

Further, in the context of the present invention, the term "non-disturbed wavefront" is generally used to describe a light wave that has a not or an only minimally perturbed wavefront (e.g. a wavefront error being smaller than one wavelength, preferably 0.25 wavelengths, preferably 0.1 wavelengths). In other words, all parts of the light wave, which are focused by an imaging system on one area (e.g. pixel), have the same or very similar phases. In particular, the phase difference (disturbance) between the interfering light waves (of the actually observed part of the wavefront) in the observers imaging system for each pixel at any time and position from which the observer can see the image is smaller than one wavelength, preferably smaller than 0.25 wavelengths, and preferably smaller than 0.1 wavelengths.

In other words, in this invention, e.g. optical lenses or mirrors are used to provide the same optical function as a coherence maintaining microlens array without the unwanted effects discussed above. To create a virtual image from which the viewing angle of each pixel is sufficiently large and similar, the assembly of optical elements (e.g. lens stack) is designed such that the light for each image pixel is focused onto the virtual plane with preferably the same chief ray angle, ideally 0°, with respect to the normal to the image plane and preferably with the same numerical aperture (e.g. 0.16). The chief ray angle is defined as the angle enclosed by the normal of said image plane (in the direction of the laser light) and the respective chief ray. To achieve this, the scanning mirror which deflects the light into different directions is located at the aperture stop of the assembly of optical elements (e.g. lens stack). To fit the scanner into the system, the assembly of optical elements (e.g. lens stack) can be designed such that the aperture stop is located in front of the first physical optical element (e.g. lens or mirror) of said assembly or after a first focusing lens arranged before the at least one mirror in the optical path. It is also important to make sure that the wavefront of each laser beam/pixel remains well behaved such that in the image of the observer, no constructive nor destructive interferences can occur. In other words, no subjective speckles are created. Such an assembly of optical elements can consist of two or more (e.g. plastic or glass) lenses (in this case said assembly is a lens stack) or mirrors. Furthermore, the virtual image created by said assembly (e.g. lens stack) can be magnified by a magnification optics. Such a system is particularly useful for head-up displays in vehicles or air planes.

Advantageously, the invention utilizes the fact that lenses (and also mirrors) only introduce small wavefront errors into the wavefront of laser light and that light with a non-disturbed wavefront (i.e. small wavefront error) does not generate subjective speckles when focused by an imaging system. The present invention can be implemented in a variety of forms. In the following, we describe some exemplary embodiments of the invention. In addition, in case an assembly of optical elements comprising merely mirrors, no chromatic aberration occurs in said assembly.

According to a preferred embodiment of the present invention, the mirror is mechanically coupled to an actuator, which actuator is designed to pivot said mirror in one or two dimensions so as to reflect the laser light beam in said different directions. Said actuator preferably interacts with a control unit for controlling said pivoting and particularly also a pulsing of the laser (e.g. so that the intensity maxima of the pulsed laser light occur at specific times and at a specific rate or duration), wherein the control unit is preferably designed to control said pivoting of the mirror and particularly said pulsing of the laser light such that the virtual image plane is raster scanned with a specific pattern by the laser light beam creating a plurality of image pixels (i.e. an image) on said virtual image plane. For instance, when the virtual image plane is spanned by an (e.g. horizontal) x-direction and an (e.g. vertical) orthogonal z-direction, the x-direction may be scanned completely for a constant z-coordinate, then the z-coordinate is increased or decreased and a new x-line is scanned until the whole image plane has been scanned. Of course, other patterns are also possible.

According to a preferred embodiment of the present invention, said actuator is a microelectromechanical system (MEMS) that is designed to pivot a single mirror in two dimensions. Alternatively, two MEMS may be used in order to pivot two mirrors in one dimension, respectively, wherein these dimensions are then linearly independent so that the laser beam can be deflected in two dimensions effectively.

For instance, such a MEMS mirror is described in WO2011/134513A1.

In such an MEMS mirror, the mirror can be actuated electromagnetically (the actuator may comprise one or several electrically conducting coils), preferably so as to pivot the mirror in one or two dimensions, i.e. about one or two independent axes. Further, actuation may be done piezoelectrically and the actuator may comprise one or more piezoelectric elements. Such MEMS actuators are preferably configured to pivot the mirror in two dimensions. Further, actuation may also be achieved electrostatically. These mirrors can be pivoted in one or two dimensions.

Further, according to a preferred embodiment of the present invention, the chief ray angles lie within the range from -25° to +25°, preferably within the range from -20° to +20°, preferably within the range from -15° to +15°, preferably within the range from - 10° to +10°, preferably within the range from -5° to +5°, preferably within the range from -1 °to +1°. Preferably, the chief ray angles are particularly 0°.

Further, according to a preferred embodiment of the present invention, said numerical apertures NA=n·sinα (where n is the index of refraction and α the respective angle between the laser light incident on the virtual image plane and the normal of said plane) lie with the range from 0.05 to 0.45, preferably within the range from 0.1 to 0.2, wherein particularly said numerical apertures are 0.16.

Further, according to a preferred embodiment of the present invention, the assembly of optical elements comprises - besides of the at least one first and second optical element - a third optical element being arranged between the aperture stop and the first optical element in the optical path, wherein the third optical element is designed to diverge the respective reflected laser beam coming from the mirror. Alternatively, the third lens is placed in front of the at least one moveable mirror and focuses or defocuses the light onto the moveable mirror resulting in a divergent laser beam after the mirror. Preferably, the first and the second optical element are then designed to re-focus the respective diverged laser light beam onto (or around) the virtual image plane. Preferably, said first and second optical element are lenses, particularly convergent lenses, e.g. convex lenses, wherein particularly one of the lenses is preferably a meniscus lens. Alternatively, the first and the second optical element may each be formed by a convex mirror.

In case the assembly of optical elements (e.g. lens stack) consists of at least these three optical elements, said at least one movable mirror may comprise a planar surface for reflecting said laser light beam through said (virtual) aperture of the aperture stop into the assembly of optical elements (e.g. lens stack).

According to an alternative embodiment of the present invention, said movable mirror comprises an (e.g. spherical) convex surface for reflecting said laser light beam such that the reflected laser light beam is diverged upon reflection by said surface, wherein particularly the first and the second optical element are designed to re-focus the respective diverged laser beam onto (or around) the virtual image plane. Again, said first and second optical element are preferably lenses, particularly convergent lenses, e.g. convex lenses. In the case of such a convex mirror, the third optical element/lens may be omitted.

Generally, in the embodiments above, the first and the second optical element are preferably lenses, preferably convergent lenses (see above). Alternatively, the first and the second optical element may each be formed by an e.g. concave (preferably spherical) mirror.

Further, in the embodiments described above, the third optical element is preferably a lens, particularly a convergent (e.g. convex) lens. According to an embodiment, the third lens may be a focus tunable lens. Such a focus tunable lens may have an automatically deformable lens body so that the focal length can be automatically adjusted. Alternatively, such a focus tunable lens may comprise a plurality of lenses which may be automatically displaceable with respect to each other so as to adjust the focal length automatically. Alternatively, such a focus tunable lens my have an automatically adjustable refractive index so that the focal length can be automatically adjusted.

Using such a focus tunable third lens, a 3D (three-dimensional) effect can be generated, making different parts of the image appearing at different distances for the observer. This can be done by moving the focus point of each pixel around the virtual image plane, i.e. in front, on, or behind said image plane. For this, a control unit is configured to control the focal length of the focus tunable lens such that the focus point of each pixel is located around (e.g. in front, on, or behind) said virtual image plane so as to generate a 3D image for an observer.

Further, according to a preferred embodiment of the present invention, the system comprises a magnifying optics being configured to changing the size of the image in the virtual image plane observed by an observer.

Preferably, said magnifying optics is at least one of: transmissive, diffractive or reflective.

Furthermore, preferably, the magnifying optics comprises at least a first surface and a second surface, wherein the second surface is an interior surface of a transparent window pane, particularly of a vehicle or an air plane, and wherein the first surface is arranged such that the laser light coming from the image pixels in the virtual image plane is reflected by the first surface towards the second surface, which in turn is preferably designed to reflect said light towards an observer, particularly such that the observer is able to observe the image comprised of said image pixels in front of him or her. Particularly, the divergence of each pixel is controlled through the magnification optics and the assembly of optical elements and the observer has the impression to see the virtual image at a specific distance. Normally, this is designed to be at 2m.

According to a further embodiment of the present invention, the initial laser light beam as provided by the laser light source before reflection of the laser light beam on the mirror has a diameter within the range from 0.05mm to 2mm, preferably within the range from 0.25mm to 0.9mm, preferably a diameter of 0.5mm.

Further, according to a preferred embodiment, the laser light source is designed to generate a monochromatic or a polychromatic laser light beam, wherein particularly said laser light beam comprises red, green and blue laser light in the visible spectrum being well collimated and aligned. For generating such monochromatic or polychromatic laser light, the laser light source may comprise one or several lasers.

Further detailed explanations and other aspects of the invention will be given below. The invention will be better understood and objects other than those set forth above will become apparent when consideration is given to the following detailed description thereof. Such description makes reference to the Figures, wherein:
- Fig. 1: schematically depicts a first embodiment of a laser projection system according to the invention;
- Fig. 2: schematically depicts a second embodiment of a laser projection system according to the invention;
- Fig. 3: schematically depicts a third embodiment of a laser projection system according to the invention;
- Fig. 4: schematically depicts a fourth embodiment which is a modification of the embodiment shown in Fig. 2;
- Fig. 5: schematically depicts a fifth embodiment which is a modification of the embodiment shown in Fig. 4;
- Fig. 6: schematically depicts a sixth embodiment of a laser projection system according to the invention;
- Fig. 7: schematically depicts a moveable mirror and an actuator for pivoting the mirror; and
- Fig. 8: schematically depicts a moveable mirror consisting of two pivotable mirrors.

The invention utilizes the fact that lenses maintain a non-disturbed wavefront of laser light and that light with a non-disturbed wavefront does not generate subjective speckles when focused by an imaging system. The present invention can be implemented in a variety of forms.

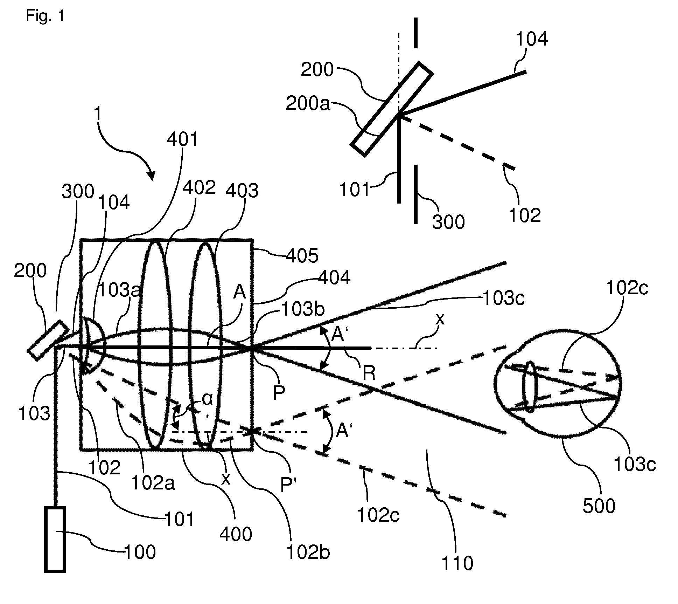

One possible embodiment of the present invention is shown in Figure 1. Here, a coherent laser light beam 101 provided by a laser light source 100 is directed onto a light deflector in the form of an MEMS mirror 200 having a planar surface 200a, which deflects the light to create an image on a virtual image plane 404. The wavefront of each pixel of the image remains non-disturbed and if imaged by an observer, e.g. an eye, neither objective nor subjective speckles are observed. For most practical projection system, however, it is not possible to send the laser light directly into the observers imaging system but a diffusive screen is normally required to increase the possible viewing angles. Unfortunately, when coherent light is sent for example through a random diffuser, the wavefront of the laser light is at least partially disturbed and when imaged by the imaging optics of an observer, subjective speckles are created on the imaging sensor.

Here, to prevent these unwanted subjective speckles the mirror 200 is placed in or close to the aperture stop 300 of a lens stack or barrel 400 that comprises a first and a second lens 402, 403 as well as a third lens 401. The third lens 401 forms the first lens in the path of a laser light beam 101 that is reflected by the mirror 200, wherein the virtual aperture stop 300 is arranged at the mirror 200. The third lens 401 (forming the first lens of the lens stack 400) is followed by a first lens 402 and a second lens 403, so that the lenses 401, 402, 403 are successively arranged along the optical axis of the lens stack 400. The lenses 401, 402, 403 are oriented parallel with respect to each other as well as parallel to the aperture stop 300. The lenses are further arranged between the aperture stop 300 and said virtual image plane 404.

As shown in Fig. 1 reflected laser beams 102, 104 having a maximal deflection are projected onto an edge region of the projected image on the virtual image plane. Further, the lens stack 400, i.e. its lenses 401. 402, 403, is configured such, that the respective reflected laser light beam 102, 103, 104, 102a, 102b, 103a, 103b is focused by the lens stack 400 onto the respective image pixel P, P' in said virtual image plane with the same chief ray angle (here e.g. 0°) and with the same numerical aperture (here e.g. 0.16). The chief ray angle A is the angle A between the respective chief ray R and a normal x of the image plane 404 (here the angle A is 0° since the normal x and the chief ray coincide). The numerical aperture NA is NA=n·sinα, where n is the index of refraction and the angle α is the respective angle between the laser light incident on the virtual image plane 404 and the normal x of said plane 404.

Thus, the laser light coming from the individual pixels P, P' of the image plane diverges such that the image can be seen from multiple viewing angles A' (FWHM) by an observer 500.

Since the mirror 200 and also the lenses 401, 402, 403 maintain the non-disturbed wavefront of the laser light 101 (typically, lenses have a Peak-Valley error of 0.1 wavelengths) no speckles are created in these pixels P, P' of the image when imaged by the observer 500.

The main advantage of such wavefront maintaining assembly is the fact that both subjective and objective speckles are prevented to occur without the need of any dynamic system (apart from the mirror 200)

In detail, in Fig. 1, the third lens 403 being a concave convex lense is designed to diverge the individual reflected laser light beams 102, 103, 104 so that diverged beams 102a, 103a are formed which are re-focused by the first and second lens 402, 403, which are convex lenses, to form a converged beam 102b, 103b being focused on a respective pixel P, P' on the image plane 404. Depending on the shape of the first and second lens 402, 403, the light of each pixel P, P' is diverged into a particular angle A' creating a diffusive image 110. Ideally, the divergence of each pixel P, P' and the chief ray angle A of the incident light onto the respective pixel are the same. The diffusive image 110 is then imaged by an observer 500 e.g. an eye. When the imaging system of the observer focuses onto the image plane 404 an image of the projection image is created on the image sensor of the observer 500. Since the lenses of the lens stack 400 (and the movable mirror 200) maintain the non-disturbed wavefront of the laser light 101, each pixel P, P' is projected onto the retina of the observer 500 without creating speckles. Therefore, the system 1 according to the invention allows the observer 500 to see a speckle free image from many viewing angles.

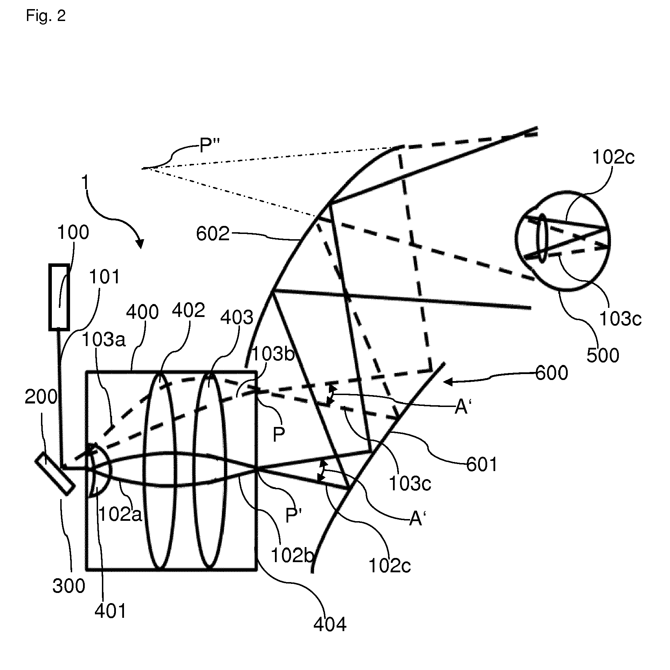

Figure 2 shows a further embodiment of the present invention, which essentially corresponds to the assembly shown in Figure 1, wherein the system 1 additionally comprises a magnifying optics 600 which is configured to magnify the image P, P' in the image plane 404 by means of at least a first and a second surface 601, 602, wherein the second surface is a surface of a window pane, e.g. of a vehicle such as a motor vehicle or an air plane. Due to the arrangement of the first and second surface 601, 602 with respect to each other and the image plane 404, the divergent light 102c, 103c from the individual pixels P, P' is reflected by the first surface 601 towards the second surface 602 which reflects said light towards the observer 500 such that the observer senses an image of the image created on the image plane 404 in front of the window pane 602. The system thus generates a head-up display of the content shown in the projected image P, P' of the virtual image plane 404. The magnification optics 600 furthermore adjusts the divergence of the projected light to pretend to the observer a particular distance of the object from the viewer.

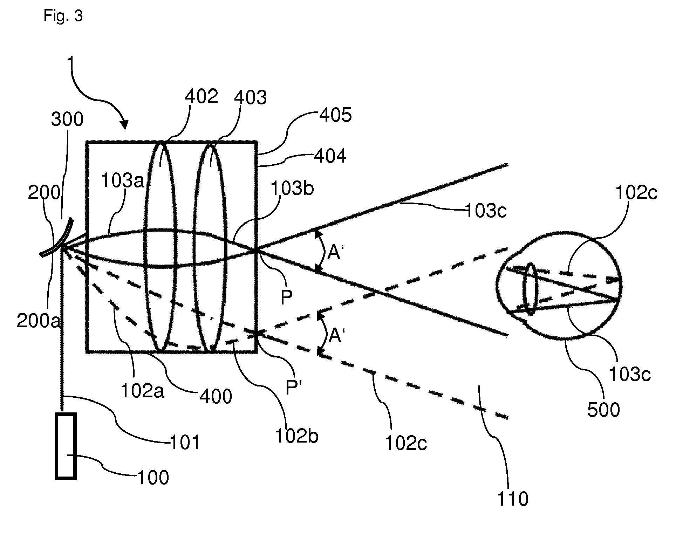

According to the further embodiment shown in Fig. 3, the mirror 200 of Figs. 1 and 2 can be replaced by a mirror having a (spherical) convex surface 200a for reflecting the laser light beam 101. Thus, the laser light is already diverged by the mirror 200 and the diverging third lens 401 of the embodiments shown in Figs. 1 and 2 can be omitted.

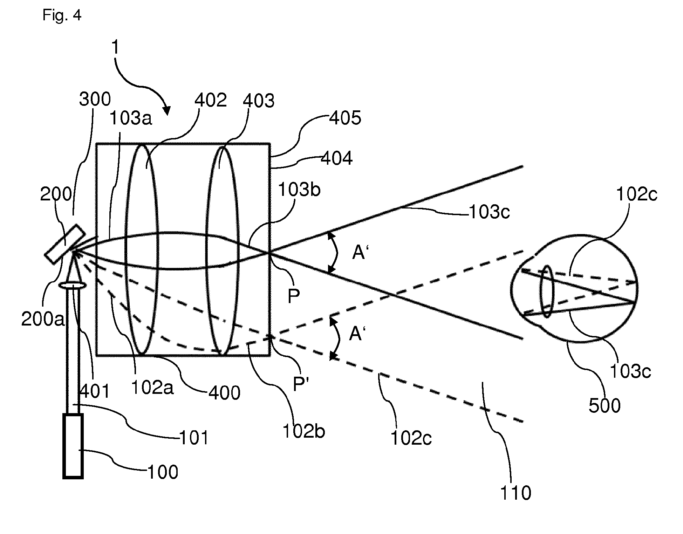

Figure 4 shows another embodiment of the invention which is configured as shown in
Fig. 2, wherein now the third lens 401 is arranged in the optical path between the laser light source 100 and the movable mirror 200. The third lens 401 is a convergent (convex) lens 401 and is configured to focus the initial laser light beam 101 on the surface 200a of the movable mirror, so as to diverge the laser light beam 102a, 103a reflected from the mirror 200. Accordingly, merely two lenses 402, 403 are necessary in the lens stack 400.

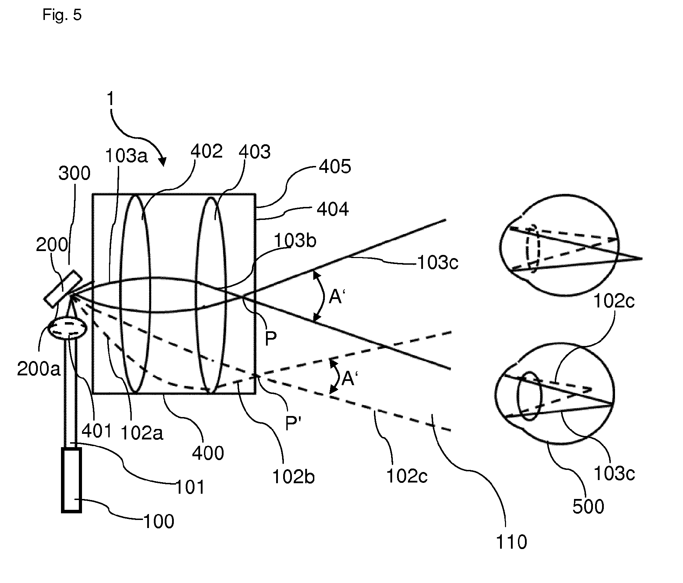

Figure 5 shows a modification of the embodiment shown in Fig. 4 where now the third lens 401 is not a static lens, but a focus tunable lens (see also above) 401, so that the respective pixels P, P' focused around the virtual image plane 404 have - depending on the focal length of the third lens 403 - a relatively high numerical aperture NA and the image appears to be closer (here pixel P) to the observer 500 or a relatively smaller numerical aperture NA and the image appears to be more far away (here pixel P'). Thus, preferably, the system 1 may also be designed to generate a 3D image by varying the focal length of the third lens 401.

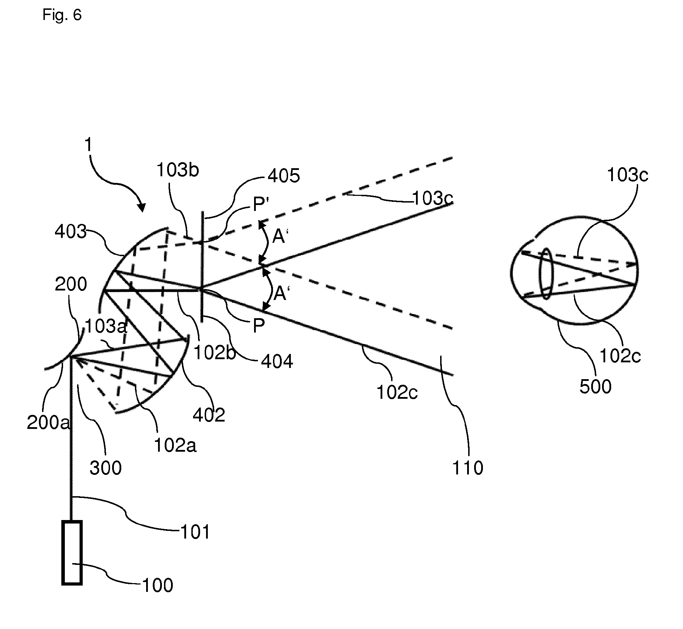

Further, Fig.6 shows an embodiment where the movable mirror 200 comprises a surface 200a for reflecting the laser light beam 101 and diverging it at the same time, wherein now the optical elements 402, 403 are formed as concave mirrors 402, 403 having each a surface for reflecting the reflected laser light beam 102a, 102b, wherein the two mirrors 402, 403 are configured to re-focus the respective laser light beam 102b, 103b onto the virtual image plane to generate a respective pixel P, P' of an image that can be observed by an observer 500 as described before.

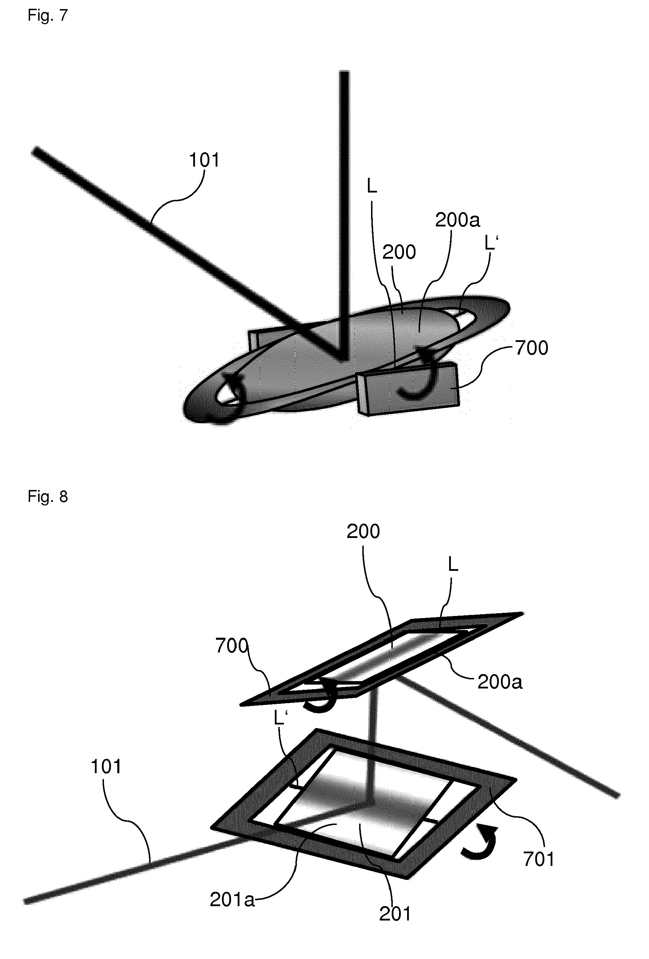

Generally, concerning the present invention, in all embodiments the moveable mirror 200 can be configured as shown in Fig. 7, which depicts a circular mirror 200 having a surface 200a (e.g. planar or convex or concave) for reflecting an incoming laser light beam 101, wherein the mirror 200 can be pivoted about two independent axes L, L' by means of an actuator 700 (see also above), so that the laser light beam 101 can be redirected in two dimensions.

Alternatively, in all embodiments, the moveable mirror (means) 200 may comprise two separate mirrors 201, 200, namely a first mirror 201 which can be pivoted in one dimension about a first axis L' by means of a first actuator 701, and a succeeding second mirror 200 being arranged after the first mirror 201 in the optical path, which actually reflects the laser light beam 101 into the assembly of optical elements/lens stack 400, wherein the second mirror 200 can be pivoted by a second actuator 700 about a second axis L which is oriented orthogonal to the first axis L', so that the initial incoming laser light beam 101 can be redirected in two dimensions as before.

The laser projection system 1 according to the invention can be used in a large variety of applications, such as: Macro- and micro-projectors for home or professional displays, Head-up displays (see above), Laptop/mobile projectors, TV-projectors, Business projectors, Head-mounted displays.

While there are shown and described presently preferred embodiments of the invention, it is to be distinctly understood that the invention is not limited thereto but may be otherwise variously embodied and practiced within the scope of the following claims.

## Claims

1. Laser projection system (1), particularly for generating a head-up display, comprising:
- a laser light source (100) being configured to provide a laser light beam (101) having a non-disturbed wavefront,
- at least one movable mirror (200) being configured to reflect said laser light beam (101) in different directions such that the respective reflected laser light beam (102a, 102b, 103a, 103b) runs through an assembly of optical elements (400) so as to generate a projection image on or around a virtual image plane (404), the image comprising an image pixel (P, P') for each of said directions, **characterized in that**
- the assembly of optical elements (400) comprises at least a first and second optical element (402, 403), wherein said optical elements (402, 403) are arranged between the moveable mirror (200) and said virtual image plane (404), and
- wherein the at least one mirror (200) is located such that the respective reflected laser light beam (102, 103, 104, 102a, 102b, 103a, 103b) is focused by the assembly of optical elements (400) onto the respective image pixel (P, P') on or around said virtual image plane (404) with the same or substantially the same chief ray angle (A) and with the same or substantially the same numerical aperture (NA) and a non-disturbed wavefront for each pixel (P, P') is received by an observer.

2. Laser projection system according to claim 1, **characterized in that** the chief ray angles (A) on said virtual image plane (404) lie within the range from -25°to +25°, preferably within the range from -20° to +20°, preferably within the range from -15° to +15°, preferably within the range from -10° to +10°, preferably within the range from -5°to +5°, preferably within the range from -1 °to +1°, wherein the chief ray angles (A) are particularly 0°.

3. Laser projection system according to one of the preceding claims, **characterized in that** said numerical apertures (NA) lie within the range from 0.05 to 0.45, preferably within the range from 0.1 to 0.2, wherein particularly said numerical apertures are 0.16.

4. Laser projection system according to one of the preceding claims, **characterized in that** the assembly of optical elements (400) comprises a third optical element (401) being arranged between the at least one moveable mirror (200) and the first optical element (402), wherein the third optical element (401) is designed to diverge the respective reflected laser beam (102a, 103a), and wherein the first and the second optical element (402, 403) are designed to re-focus the respective diverged laser light beam (102b, 103b) onto or around the virtual image plane (404).

5. Laser projection system according one of the claims 1 to 3, **characterized in that** the assembly of optical elements (400) comprises a third optical element (401) being arranged between the laser source (100) and the at least one movable mirror (200) wherein the third optical element (401) is configured to diverge the respective reflected laser beam (102a, 103a) after the at least one movable mirror (200), and wherein the first and the second optical elements (402, 403) are designed to re-focus the respective diverged laser light beam (102b, 103b) onto or around the virtual image plane (404).

6. Laser projection system according to claim 5, **characterized in that** the third optical element (401) is a focus tunable lens comprising a tunable focal length, wherein the laser projection system (1) is adapted to tune said focal length such that the focus point of each pixel (P, P') is located in front, on, or behind said virtual image plane (404) so as to generate a 3D image for an observer.

7. Laser projection system according to one of the preceding claims, **characterized in that** said at least one movable mirror (200) comprises a planar surface (200a) for reflecting said laser light beam (101).

8. Laser projection system according to one of the claims 1 to 5, **characterized in that** said at least one moveable mirror (200) comprises a convex surface (200a) for reflecting said laser light beam (101) such that the reflected laser light beam (102a, 103a) is diverged upon reflection by said surface (200a), wherein particularly the first and the second optical element (402, 403) are designed to re-focus the respective diverged laser beam (102b, 103b) onto or around the virtual image plane (404).

9. Laser projection system according to one of the preceding claims **characterized in that** the first optical element is a lens or a mirror, and/or the second optical element is a lens or a mirror, and/or the third optical element is a lens, wherein particularly the third lens is a focus tunable lens.

10. Laser projection system according to one of the preceding claims, **characterized in that** the laser projection system (1) comprises a magnifying optics (600) being configured to changing the size of the image (P, P') in the virtual image plane (404) observed by an observer.

11. Laser projection system according to claim 10, characterized that the magnifying optics (600, 601, 602) is at least one of: transmissive, diffractive or reflective.

12. Laser projection system according to claim 10 or 11, **characterized in that** the magnifying optics (600) comprises at least one surface (602), wherein the surface (602) is a partially reflective surface of a windshield, particularly of a vehicle or an air plane, which is designed to reflect said laser light (102b, 103b) towards an observer (500).

13. Laser projection system according to one of the preceding claims, **characterized in that** a non-disturbed wavefront is a wavefront having a wavefront error of less than one wavelength, in particular less than 0.25 wavelengths, and in particular less than 0.1 wavelengths throughout the laser projection system (1) for each pixel (P, P') of the actually observed part of the wavefront by the observer at any time and possible location of the observer.

14. Laser projection system according to one of the preceding claims, **characterized in that** said laser light beam (101) has a diameter within the range from 0.05mm to 2.0mm, preferably within the range from 0.2mm to 0.9mm, preferably a diameter of 0.5mm.

15. Laser projection system according to one of the preceding claims, **characterized in that** the laser light source (100) is designed to generate a monochromatic or a polychromatic laser light beam (101), wherein particularly said laser light beam (101) comprises red, green and blue laser light being aligned and particularly pulsed.
